# EUROPEAN PATENT APPLICATION

(11) **EP 3 740 014 A1**
(43) Date of publication of application: **18.11.2020**
(21) Application number: 18899102.0
(22) Date of filing: 11.01.2018
(51) Int. Cl.: H04W 72/12, H04W 16/28, H04W 72/04

(54) **USER TERMINAL AND WIRELESS COMMUNICATION METHOD**

(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); LIU, Min, Beijing 100190 (CN); HOU, Xiaolin, Beijing 100190 (CN)
(74) Representative: Hoffmann Eitle
(86) International application number: PCT/JP2018/000483
(87) International publication number: WO 2019/138499

(57) **Abstract**

According to one aspect of the present disclosure, a user terminal has a receiving section that receives a downlink shared channel that is scheduled by at least one of first downlink control information (DCI) and second downlink control information (DCI), and a control section that controls receipt of at least one of the second DCI and the downlink shared channel, based on a state of a transmission configuration indicator (TCI) included in the first DCI.

## Description

### Technical Field

The present disclosure relates to a user terminal and a radio communication method in next-generation mobile communication systems.

### Background Art

In the UMTS (Universal Mobile Telecommunications System) network, the specifications of long-term evolution (LTE) have been drafted for the purpose of further increasing high speed data rates, providing lower latency and so on (see non-patent literature 1). Also, the specifications of LTE-A (also referred to as "LTE-advanced," "LTE Rel. 10," "LTE Rel. 11," or "LTE Rel. 12") have been drafted for further broadbandization and increased speed beyond LTE (also referred to as "LTE Rel. 8" or "LTE Rel. 9"), and successor systems of LTE (also referred to as, for example, "FRA (Future Radio Access)," "5G (5th generation mobile communication system)," "NR (New Radio)," "NX (New radio access)," "FX (Future generation radio access)," "LTE Rel. 13," "LTE Rel. 14," "LTE Rel. 15" or later versions) are under study.

In existing LTE systems (for example, LTE Rel. 8 to 13), a user terminal (UE (User Equipment)) controls the receipt of a downlink shared channel (for example, PDSCH (Physical Downlink Shared CHannel)) based on downlink control information (also referred to as "DCI," "DL assignment," etc.) from a radio base station. Furthermore, a user terminal controls the transmission of an uplink shared channel (for example, PUSCH (Physical Uplink Shared CHannel)) based on DCI (also referred to as "UL grant," etc.).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall Description; Stage 2 (Release 8)," April, 2010

### Summary of Invention

### Technical Problem

Future radio communication systems (for example, NR, 5G, 5G+, or Rel. 15 and later versions) are under study to carry out communication by using beamforming (BF). In order to improve the quality of communication using BF, studies are underway to control at least one of transmission and receipt of signals by taking into account the relationship of quasi-co-location (QCL) between a number of signals (QCL relationship).

Furthermore, envisaging such future radio communication systems, studies are underway to support not only receiving processes for a downlink shared channel using a single DCI (also referred to as "single-stage DCI," "single-part DCI," etc.), but also receiving processes for a downlink shared channel using multiple DCIs (for example, two-stage DCI to include first and second-stage DCIs, etc.).

However, when receiving processes for a downlink shared channel are performed by using multiple DCIs (for example, two-stage DCI), the problem lies in how to determine (specify) the QCL relationship of the downlink shared channel (for example, PDSCH). In addition, how to determine (specify) the QCL relationship of the downlink control channel (for example, PDCCH) for delivering each of the multiple DCIs is also a problem. Unless these QCL relationships are properly specified to a user terminal, there is a possibility that the user terminal is unable to achieve the gain of assuming (considering) QCL sufficiently.

The present invention has been made in view of the above, and it is therefore an object of the present invention to provide a user terminal and a radio communication method, whereby the gain of assuming QCL can be achieved even when receiving processes for a downlink shared channel are performed by using multiple DCIs (for example, two-stage DCI).

### Solution to Problem

According to one aspect of the present invention, a user terminal has a receiving section that receives a downlink shared channel that is scheduled by at least one of first downlink control information (DCI) and second downlink control information (DCI) and a control section that controls receipt of at least one of the second DCI and the downlink shared channel, based on a state of a transmission configuration indicator (TCI) included in the first DCI.

### Advantageous Effects of Invention

According to one aspect of the present invention, the gain of assuming QCL can be achieved even when downlink shared channel receiving processes are performed by using multiple DCIs (for example, second-stage DCI).

### Brief Description of Drawings

FIGs. 1A and 1B are diagrams to show examples of user terminal operations to use two-stage DCI;
FIGs. 2A and 2B are diagrams to show examples of TCI states according to a first example of the present invention;
FIGs. 3A and 3B are diagrams to show examples of TCI states according to a second example of the present invention;
FIGs. 4A to 4C are diagrams to show examples of TCI states according to a third example of the present invention;
FIG. 5 is a diagram to show an exemplary schematic structure of a radio communication system according to the present embodiment;
FIG. 6 is a diagram to show an exemplary overall structure of a radio base station according to the present embodiment;
FIG. 7 is a diagram to show an exemplary functional structure of a radio base station according to the present embodiment;
FIG. 8 is a diagram to show an exemplary overall structure of a user terminal according to the present embodiment;
FIG. 9 is a diagram to show an exemplary functional structure of a user terminal according to the present embodiment; and
FIG. 10 is a diagram to show an exemplary hardware structure of a radio base station and a user terminal according to the present embodiment.

### Description of Embodiments

### (QCL for PDSCH)

Envisaging future radio communication systems (for example, Rel. 15 and later versions, 5G, 5G+, NR, etc.), studies are in progress to have a user terminal control the receiving processes (for example, at least one of demapping, demodulation and decoding) for a downlink shared channel (for example, PDSCH) based on information about the quasi-co-location (QCL) (QCL information) of the downlink shared channel.

Here, quasi-co-location (QCL) is an indicator to show a channel's statistical nature. For example, when one signal and another signal hold a QCL relationship, it is possible to assume that at least one of the doppler shift, the doppler spread, the average delay, the delay spread and spatial parameters (for example, spatial Rx parameter) is the same between these varying signals.

There may be one or more types of QCL (QCL types) with different parameters that can be assumed to be the same. For example, four QCL types A to D may be provided with different parameters that can be assumed to be the same.
QCL type A: QCL where the doppler shift, the doppler spread, the average delay and the delay spread can be assumed to be the same;
QCL type B: QCL where the doppler shift and the doppler spread can be assumed to be the same;
QCL type C: QCL where the average delay and the doppler shift can be assumed to be the same; and
QCL type D: QCL where the spatial Rx parameter can be assumed to be the same.

The state of the transmission configuration indicator (TCI) (TCI state) may represent (include) information about the QCL of the PDSCH (also referred to as "QCL information" or "QCL information for the PDSCH"). This QCL information for the PDSCH is, for example, information about the QCL between the PDSCH (or the DMRS port for the PDSCH) and a downlink reference signal (DL-RS), and may include, for example, at least one of information about the DL-RS that holds a QCL relationship (DL-RS-related information) and information to indicate the above QCL type (QCL type information).

As used herein, a DMRS port refers to an antenna port for a demodulation reference signal (DMRS). A DMRS port may be a DMRS port group that includes a number of DMRS ports, and, a DMRS port as used in this specification may be interpreted as a DMRS port group.

The DL-RS-related information may include at least one of information to indicate a DL-RS that holds a QCL relationship and information to indicate the resource of this DL-RS. For example, when a user terminal is configured with a number of reference signal sets (RS sets), the DL-RS-related information may indicate, among the reference signals included in this RS set, given DL-RSs that hold QCL relationships with the PDSCH (or with the DMRS port for the PDSCH) and the resource for this DL-RS.

Here, the DL-RS may be at least one of synchronization signals (for example, at least one of a primary synchronization signal (PSS) and a secondary synchronization signal (SSS)), a mobility reference signal (MRS), a synchronization signal block (SSB), a channel state information-reference signal (CSI-RS), a demodulation reference signal (DMRS), a broadcast channel (PBCH (Physical Broadcast CHannel)), a beam-specific signal, and so forth, or may be a signal that is formed by enhancing and/or modifying at least one of these signals (for example, a signal that is formed by changing the density and/or the cycle of at least one of the above signals).

As described above, each TCI state can represent (include) QCL information for the PDSCH. For the user terminal, one or more TCI states (QCL information for one or more PDSCHs) may be reported (configured) from a radio base station through higher layer signaling (for example, RRC signaling). Note that the number of TCI states that may be configured for the user terminal may be limited based on the QCL type.

The DCI (DL assignment) to use for PDSCH scheduling may include a given field (TCI-state field) to indicate the TCI state (QCL information for PDSCH). The TCI-state field may be comprised of a given number of bits (for example, three bits). Whether or not this TCI-state field is included in DCI may be controlled by a report (for example, higher layer signaling) from the radio base station.

For example, when DCI includes a three-bit TCI-state field, the radio base station may configure the user terminal with up to eight types of TCI states, in advance, through higher layer signaling. The value of the TCI-state field (TCI-state field value) in DCI may indicate one of the TCI states configured in advance through higher layer signaling.

If the user terminal is configured with more than eight types of TCI states, eight or fewer types of TCI states may be activated (specified) by a MAC CE (Medium Access Control Control Element). The value of the TCI-state field in the DCI may indicate one of the TCI states activated by the MAC CE.

The user terminal determines the QCL of the PDSCH (or the DMRS port for the PDSCH) based on what TCI state is indicated in the DCI (QCL information for the PDSCH). For example, the user terminal controls the receiving processes (for example, the decoding process and/or the demodulation process, etc.) for the PDSCH on the assumption that the DMRS port (or the DMRS port group) for the PDSCH of the serving cell is quasi-co-located (QCL) with DL-RSs corresponding to the TCI state reported in the DCI. By this means, the accuracy of the receipt of the PDSCH can be improved.

### (QCL for PDCCH)

Also, envisaging this future radio communication system, studies are underway to have a user terminal control the receiving processes for a downlink control channel (for example, PDCCH) based on information about the QCL (QCL information) of this downlink control channel.

The TCI state may represent (include) information about the QCL of the PDCCH (also referred to as "QCL information," "QCL information for the PDCCH," etc.). The QCL information for the PDCCH is, for example, information about the QCL between the PDCCH (or the DMRS port for the PDCCH) and DL-RSs, and may include, for example, at least one of information about the DL-RSs that holds QCL relationships (DL-RS-related information) and information to indicate the QCL types (QCL type information), which have been described earlier. The DL-RS-related information and the DL-RSs are as described with the QCL for the PDSCH.

Alternatively, the QCL information for the PDCCH may be information about the QCL between the control resource set (CORESET) where the PDCCH is mapped, and DL-RSs, and may include, for example, at least one of information that shows which CORESETs hold quasi-co-location (QCL) relationships, and information to show the above QCL types.

A CORESET here is a resource field where the PDCCH may be allocated, and may be comprised of given frequency-domain resources and time-domain resources (for example, one or two OFDM symbols). A CORESET can be configured to be equal to or less than a system bandwidth (carrier bandwidth) or the maximum bandwidth which the user terminal can perform receiving processes for.

The user terminal monitors (blind-decodes) the DCIs transmitted via the downlink control channel in the CORESETs (or the search spaces in the CORESETs), and detects the DCI for the user terminal.

K (K≥1) TCI states (QCL information for K PDCCHs) per CORESET may be reported (configured) from the radio base station to the user terminal through higher layer signaling (for example, RRC signaling).

When a number of TCI states are configured in association with a CORESET (K>1), the radio base station may activate (specify) given TCI states (for example, one TCI state), for the user terminal, by using a MAC CE. The MAC CE may represent (include), for example, the index of a CORESET where the TCI state is changed, and one TCI state to be configured for that CORESET. Also, given a CORESET where the TCI state is changed, two or more candidate TCI states may be configured in advance through higher layer signaling (for example, RRC signaling).

In addition, after a given period (for example, four slots, ten symbols, etc.) passes after the above-mentioned MAC CE (the PDSCH to deliver the MAC CE) is received, the user terminal may receive (including performing channel estimation, demodulation, and so forth) the PDCCH subject to monitoring in the CORESET specified by the MAC CE, by assuming the TCI state specified by the MAC CE.

Note that, when a single TCI state is configured in association with a CORESET (K=1), it is not necessary to report the TCI state by using the MAC CE.

The user terminal determines the QCL of the PDCCH (or the DMRS port for the PDCCH) based on TCI states (QCL information for the PDCCH) configured or specified as described above. For example, the user terminal assumes that the DMRS port (or the CORESET) for the PDCCH is quasi-co-located (QCL) with a DL-RS corresponding to a TCI state, and controls the receiving processes for the PDCCH (for example, the decoding process and/or the demodulation process, etc.). By this means, the accuracy of receipt of the PDCCH can be improved.

### (Two-Stage DCI)

Now, for the above future radio communication system, studies are underway to support not only receiving processes for a downlink shared channel using a single DCI (also referred to as, for example, "single-stage DCI," "single-part DCI," etc.), but also receiving processes for a downlink shared channel using multiple DCIs (also referred to as, for example, "first and second DCIs," "two-stage DCI," "two-part DCI," etc.).

In the event two-stage DCI is used, DL control signaling of the physical layer (LI) may be divided into a first-stage DCI and a second-stage DCI. The user terminal may control the receipt and/or transmission of signals, based on the first-stage DCI and the second-stage DCI.

The periodicity of the first-stage DCI may be longer than that of the second-stage DCI. To be more specific, the first-stage DCI may be transmitted in a slot (for example, a 1-ms transmission time interval (TTI)) having a relatively long periodicity (that is, comprised of a large number of symbols). The second-stage DCI may be transmitted in a slot (which may be, for example, a two, three, four or seven-symbol TTI) having a shorter periodicity (that is, comprised of a smaller number of symbols) than the first-stage DCI.

The first-stage DCI may communicate (deliver) control information that is needed to receive at least one of the second-stage DCI and the corresponding PDSCH. Also, the first-stage DCI may communicate information needed to receive the second-stage DCI and/or information needed to transmit the corresponding PUSCH. The first-stage DCI may be also referred to as "first-part DCI (second-part DCI)," "first DCI," "slow DCI," and so on.

The second-stage DCI may communicate information that is needed to receive the corresponding PDSCH, and/or information that is needed to transmit at least one of the PUSCH that corresponds to corresponding uplink control information (UCI), and an uplink reference signal (UL-RS). The second-stage DCI may be referred to as "second-part DCI," "second DCI" or "fast DCI" and so on.

Here, the UCI may include at least one of delivery acknowledgment information (also referred to as "HARQ-ACK (Hybrid Automatic Repeat reQuest ACKnowledgement)," "ACK/NACK (ACKnowledgement/Non-ACKnowledgement)," etc.) in response to the PDSCH, channel state information (CSI), and a scheduling request (SR). The uplink reference signal (UL-RS) may include, for example, at least one of a sounding reference signal (SRS) and a phase noise compensation reference signal (PTRS (Phase Tracking Reference Signal)).

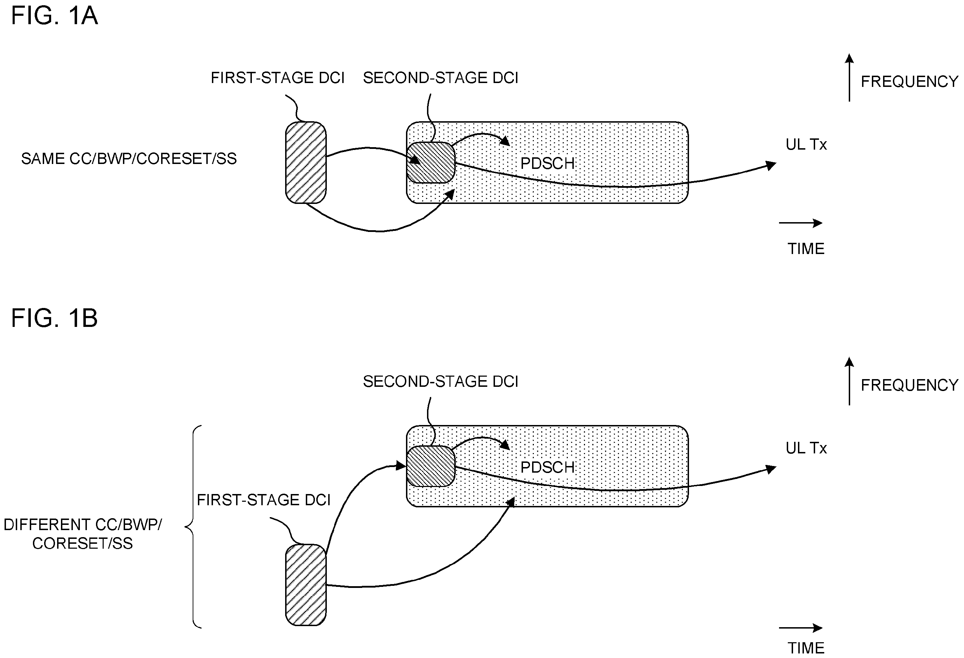

FIGs. 1 are diagrams to show examples of user terminal operations to use two-stage DCI. In FIG. 1A, at least one of the carrier (component carrier (CC), cell or serving cell) of the first-stage DCI, the partial band (or the bandwidth part (BWP)), the CORESET and the search space (SS) configured in the carrier is the same as that of the second-stage DCI. On the other hand, in FIG. 1B, at least one of the CC, the BWP, the CORESET and the SS of the first-stage DCI is different from that of the second-stage DCI.

As shown in FIGs. 1A and 1B, the user terminal may monitor (blind-decode) the second-stage DCI based on at least one of the CC, the BWP, the CORESET and the SS determined based on information included in the first-stage DCI. Also, the user terminal may control the receiving processes (for example, at least one of mapping, demodulation, and decoding) for the PDSCH based on at least one of information included in the first-stage DCI and information included in the second-stage DCI.

In FIGs. 1A and 1B, the user terminal may control uplink transmission processes (for example, at least one of mapping, demodulation, and decoding) based on information included in the second-stage DCI. The target of uplink transmission processes (UL Tx) may be at least one of the HARQ-ACK in response to the PDSCH, the CSI, the SRS, the PTRS and the PUSCH. Note that the user terminal may control the transmission processes for the PUSCH based on at least one of the information included in the first-stage DCI and the information included in the second-stage DCI.

However, when receiving processes for a downlink shared channel are performed by using multiple DCIs (for example, two-stage DCI), the problem lies in how to determine (specify) the QCL relationship of the PDSCH. In addition, how to determine (specify) the QCL relationship of the PDCCH (or CORESET) for delivering each of the multiple DCIs is also a problem. Unless these QCL relationships are properly specified to a user terminal, there is a possibility that the user terminal is unable to achieve the gain of assuming (considering) QCL sufficiently.

So, in order to achieve the gain of assuming QCL even when receiving processes for a downlink shared channel are performed by using a number of DCIs (for example, two-stage DCI), the present inventors have worked on a method of properly determining (specifying) the QCL of the PDSCH and the PDCCH (or the CORESET) for delivering each of these multiple DCIs, and arrived at the present invention.

Now, embodiments of the present invention will be described below in detail with reference to the accompanying drawings. Note that, although the following description will describe cases in which the PDSCH is demodulated based on TCI states, the present embodiment is by no means limited to this. The present embodiment can be applied to operations to use TCI states (for example, receiving processes for other signals or channels). Also, in the following description, QCL may be interpreted as being spatially quasi-co-located (QCL).

### (First Example)

In a first example of the present invention, the first-stage DCI may include a given field value (also referred to as the "TCI-state field value," or simply the "TCI state"), which represents at least one of QCL information for the PDSCH (or the TCI state to represent this QCL information) and QCL information for the second-stage DCI (or the TCI state to represent this QCL information).

The QCL information for the PDSCH may include, for example, information about a DL-RS holding a QCL relationship with the PDSCH (or the DMRS port for the PDSCH) (for example, the above DL-RS-related information) and information to show the type of QCL (for example, the above-described QCL-type information).

The QCL information for the second-stage DCI may include, for example, information (for example, the above-described DL-RS-related information) about a DL-RS holding a QCL relationship with any of the PDCCH that delivers the second-stage DCI, the DMRS port for the PDCCH, and the CORESET where the PDCCH is mapped, and information to show the type of QCL (for example, the above QCL type information).

In the first example, the user terminal may assume that the PDSCH and the second-stage DCI are quasi-co-located (QCLed) without any indications. To be more specific, the QCL between the DMRS port for the PDSCH and the DMRS port for the PDCCH that delivers the second-stage DCI may be assumed without any indications. Alternatively, the QCL relationship between the DMRS port for the PDSCH and the CORESET where the second-stage DCI is monitored may be assumed without any indications.

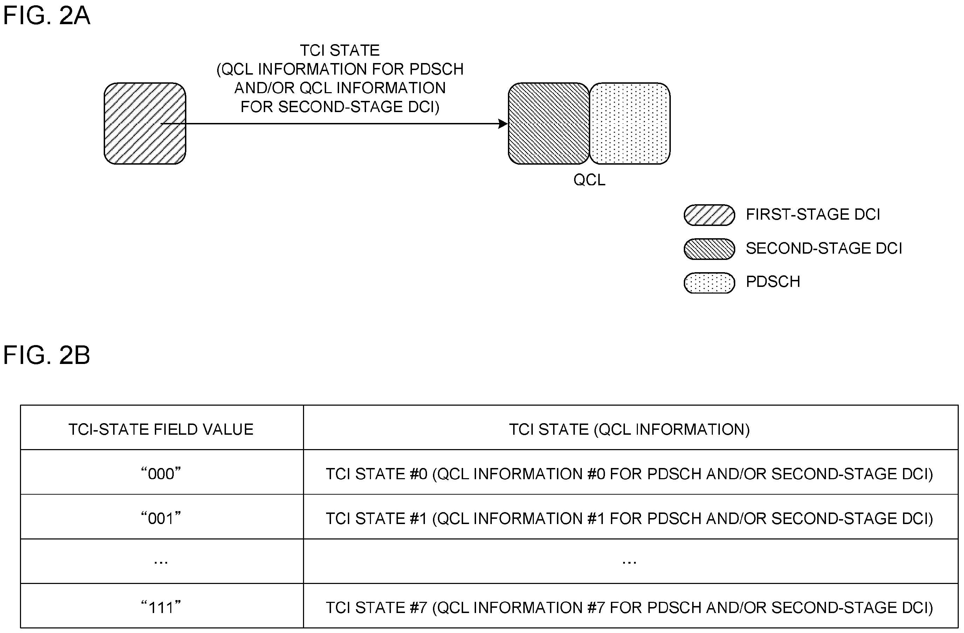

FIGs. 2 are diagrams to show examples of TCI states according to the first example. In FIG. 2A, it is assumed that the DMRS port for the PDSCH and the DMRS port (or the CORESET) for the PDCCH that delivers the second-stage DCI hold a QCL relationship.

In FIG. 2A, the first-stage DCI may include a TCI-state field. Note that this first-stage DCI may include the TCI-state field when a given higher layer parameter is configured enabled. Also, whether the TCI-state field is enabled or disabled may be determined per CORESET configuration.

As shown in FIG. 2B, the TCI-state field value included in the first-stage DCI may indicate at least one of the above-mentioned QCL information for the PDSCH and the above-mentioned QCL information for the second-stage DCI. Alternatively, the TCI-state field value may represent a TCI state to represent at least one of QCL information for the PDSCH and QCL information for the second-stage DCI.

For example, if the first-stage DCI includes a three-bit TCI-state field, up to eight types of TCI states (QCL information for the PDSCH and/or the second-stage DCI) may be reported (configured) from a radio base station to a user terminal through higher layer signaling. One of the TCI states configured (or QCL information for the PDSCH and/or the second-stage DCI) may be specified by the TCI-state field value included in the first-stage DCI. Note that the number of bits of the TCI-state field is by no means limited to three bits.

When more than eight types of TCI states (QCL information for the PDSCH and/or QCL information for the second-stage DCI) are reported (configured) through higher layer signaling, the activation of these TCI states may be controlled by a MAC CE. For example, eight or fewer types of TCI states may be activated (specified) by a MAC CE, and one of the activated TCI states may be specified by the TCI-state field value included in the first-stage DCI.

With the first example, when the offset (time offset) between the timing (slot or symbol) of the first-stage DCI and the timing (slot or symbol) of the second-stage DCI is smaller than (or below) a given threshold, the user terminal may assume that at least one of the PDSCH and the second-stage DCI is quasi-co-located (QCLed) with a given CORESET (for example, the CORESET having the lowest index).

For example, when the above time offset is smaller than (or below) a given threshold, the user terminal may assume that at least one of the DMRS port (one or more antenna ports in one DMRS port group) for the PDSCH, the DMRS port (one or more antenna ports in one DMRS port group) for the PDCCH that delivers the second-stage DCI, and the CORESET where the second-stage DCI is monitored is quasi-co-located (QCLed) with the CORESET having the lowest index number.

With the first example, the QCL information for the first-stage DCI (or the TCI state to represent this QCL information) may be reported (configured) from the radio base station to the user terminal through higher layer signaling.

Here, the QCL information for the first-stage DCI may include, for example, information (for example, the above-described DL-RS-related information) about a DL-RS holding a QCL relationship with any of the PDCCH that delivers the first-stage DCI, the DMRS port for the PDCCH, and the CORESET where the PDCCH is mapped, and information to show the type of QCL (for example, the above QCL type information).

Note that, when a number of pieces of QCL information (TCI states) are configured for the first-stage DCI through higher layer signaling, one of these pieces of QCL information (TCI states) may be activated (specified) by a MAC CE. This MAC CE may be different from the MAC CE for reporting QCL information (TCI state) for the PDSCH and/or the like.

On the other hand, when the QCL information (TCI states) for the first-stage DCI is not configured through higher layer signaling, the user terminal may assume that the DMRS port for the PDCCH that delivers the first-stage DCI in the serving cell (one or more antenna ports in one DMRS port group) is spatially quasi-co-located (QCLed) with the SSB that is determined in initial access procedures.

In the first example, assuming that the PDSCH and the second-stage DCI are quasi-co-located (QCLed), and the TCI-state field value (or the TCI state) included in the first-stage DCI indicates at least one of QCL information for the PDSCH and QCL information for the second-stage DCI. In this way, with the first example, only the first-stage DCI includes a TCI-state field value, so that when the receiving processes for the PDSCH are performed by using second-stage DCI, it is possible to reduce the overhead of DCI, and, furthermore, achieve the gain of assuming QCL.

### (Second Example)

A second example of the present invention is different from the first example in that the first-stage DCI and the second-stage DCI are quasi-co-located (QCLed) without any indications. To be more specific, the QCL between the DMRS port for the PDCCH that delivers the first-stage DCI and the DMRS port for the PDCCH that delivers the second-stage DCI may be assumed without any indications. Alternatively, the QCL relationship between the CORESET where the first-stage DCI is monitored and the CORESET where the second-stage DCI is monitored may be assumed without any indications.

With the second example, the first-stage DCI may include a given field value (also referred to as the "TCI-state field value" or simply the "TCI state") that indicates QCL information for the PDSCH (or the TCI state to represent this QCL information). Differences from the first example will be primarily described below.

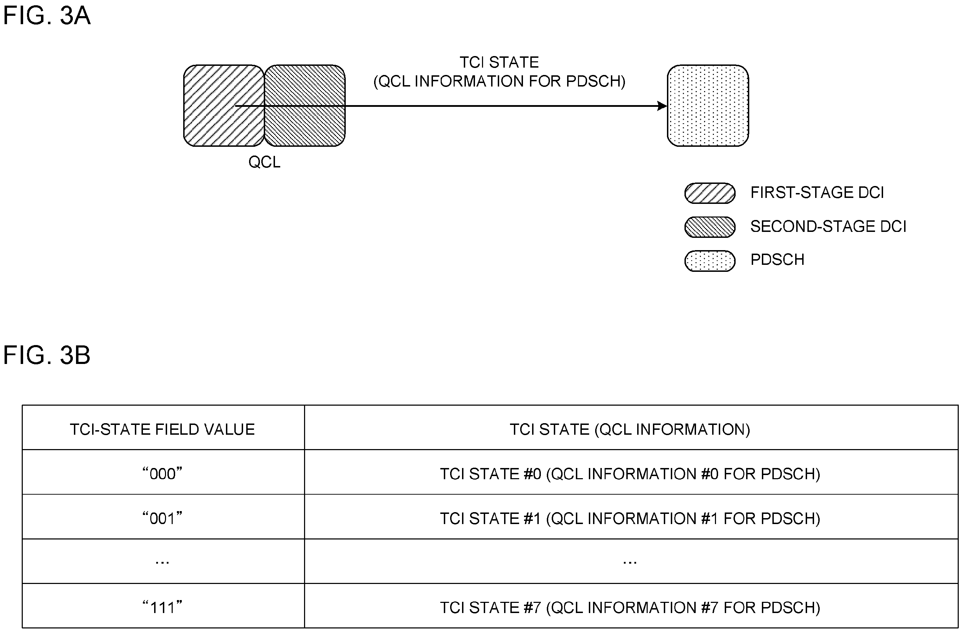

FIGs. 3 are diagrams to show examples of TCI states according to the second example. In FIG. 3A, it is assumed that the DMRS port for the PDCCH that delivers the first-stage DCI and the DMRS port for the PDCCH that delivers the second-stage DCI hold a QCL relationship.

In FIG. 3A, the first-stage DCI may include a TCI-state field. Note that this first-stage DCI may include the TCI-state field when a given higher layer parameter is configured enabled. Also, whether the TCI-state field is enabled or disabled may be determined per CORESET configuration.

As shown in FIG. 3B, the TCI-state field value included in the first-stage DCI may indicate the above-described QCL information for the PDSCH. Alternatively, the TCI-state field value may represent a TCI state to represent QCL information for the PDSCH.

For example, if the first-stage DCI includes a three-bit TCI-state field, up to eight types of TCI states (QCL information for the PDSCH) may be reported (configured) from a radio base station to a user terminal through higher layer signaling. One of the TCI states configured (or QCL information for the PDSCH) may be specified by the TCI-state field value included in the first-stage DCI. Note that the number of bits of the TCI-state field is by no means limited to three bits.

When more than eight types of TCI states (QCL information for the PDSCH) are reported (configured) through higher layer signaling, the activation of these TCI states may be controlled by a MAC CE. For example, eight or fewer types of TCI states may be activated (specified) by a MAC CE, and one of the activated TCI states may be specified by the TCI-state field value included in the first-stage DCI.

With the second example, when the offset (time offset) between the timing (slot or symbol) of the first-stage DCI and the timing (slot or symbol) of the second-stage DCI is smaller than (or below) a given threshold, the user terminal may assume that the PDSCH is quasi-co-located (QCLed) with a given CORESET (for example, the CORESET having the lowest index).

For example, when the time offset is smaller than (or below) a given threshold, the user terminal may assume that the DMRS port for the PDSCH (one or more antenna ports in one DMRS port group) is quasi-co-located (QCLed) with the CORESET having the lowest index number.

With the second example, the first-stage DCI and the second-stage DCI are quasi-co-located (QCLed), and the TCI-state field value (or the TCI state) included in the first-stage DCI indicates QCL information for the PDSCH. In this way, with the second example, only the first-stage DCI includes a TCI-state field value, so that when the receiving processes for the PDSCH are performed by using second-stage DCI, it is possible to reduce the overhead of DCI, and, furthermore, achieve the gain of assuming QCL.

### (Third Example)

A third example of the present invention is different from the first and the second examples in that QCL without any indications is not assumed. With the third example, the first-stage DCI may include a given field value (also referred to as the "TCI-state field value" or simply the "TCI state") that indicates QCL information for the second-stage DCI (or the TCI state to represent this QCL information).

In addition, with the third example, the second-stage DCI may include a given field value (also referred to as the "TCI-state field value" or simply the "TCI state") that indicates QCL information for the PDSCH (or the TCI state to represent this QCL information). Differences from first example will be primarily described below.

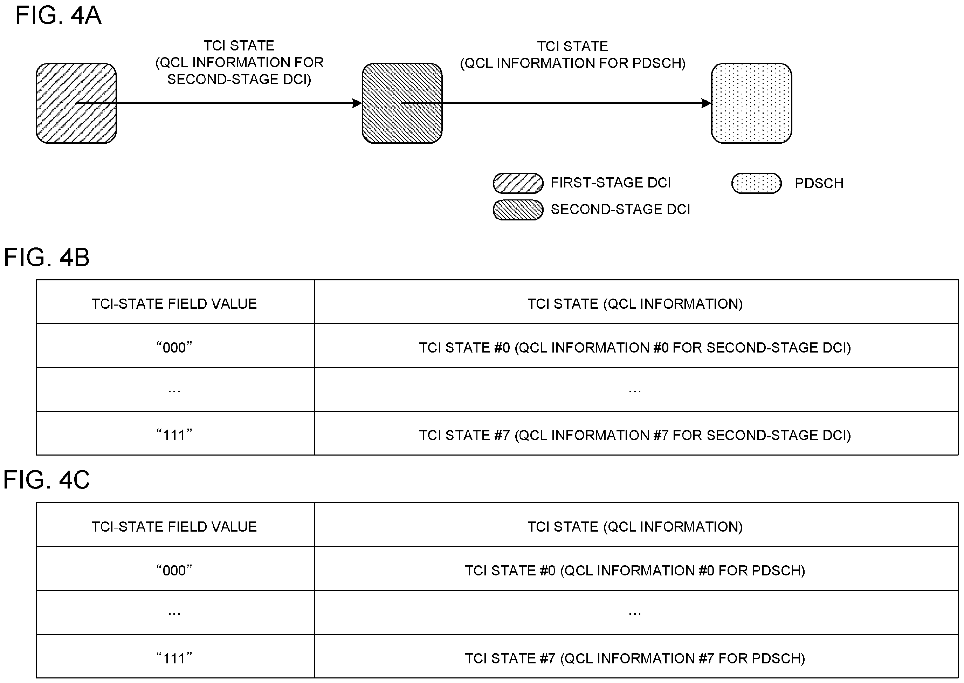

FIGs. 4 are diagrams to show examples of TCI states according to the third example. FIG. 4A assumes that the first-stage DCI and the second-stage DCI both include a TCI-state field. In addition, the first-stage DCI and the second-stage DCI may both include a TCI-state field when a given higher layer parameter is configured enabled. Also, whether the TCI-state field is enabled or disabled may be determined per CORESET configuration.

As shown in FIG. 4B, the TCI-state field value included in the first-stage DCI may indicate the above-described QCL information for the second-stage DCI. Alternatively, this TCI-state field value may represent a TCI state to represent QCL information for the second-stage DCI.

For example, if the first-stage DCI includes a three-bit TCI-state field, up to eight types of TCI states (QCL information for the second stage DCI) may be reported (configured) from a radio base station to a user terminal through higher layer signaling. One of the TCI states configured (or QCL information for the second-stage DCI) may be specified by the TCI-state field value included in the first-stage DCI. Note that the number of bits of the TCI-state field is by no means limited to three bits.

When more than eight types of TCI states (QCL information for the second-stage DCI) are reported (configured) through higher layer signaling, the activation of these TCI states may be controlled by a MAC CE. For example, eight or fewer types of TCI states may be activated (specified) by a MAC CE, and one of the activated TCI states may be specified by the TCI-state field value included in the first-stage DCI.

Also, as shown in FIG. 4C, the TCI-state field value included in the second-stage DCI may indicate the above-mentioned QCL information for the PDSCH. Alternatively, the TCI-state field value may represent a TCI state to represent QCL information for the PDSCH.

For example, if the second-stage DCI includes a three-bit TCI-state field, up to eight types of TCI states (QCL information for the PDSCH) may be reported (configured) from a radio base station to a user terminal through higher layer signaling. One of the TCI states configured (or QCL information for the PDSCH) may be specified by the TCI-state field value included in the second-stage DCI. Note that the number of bits of the TCI-state field is by no means limited to three bits.

When more than eight types of TCI states (QCL information for the PDSCH) are reported (configured) through higher layer signaling, the activation of these TCI states may be controlled by a MAC CE. For example, eight or fewer types of TCI states may be activated (specified) by a MAC CE, and one of the activated TCI states may be specified by the TCI-state field value included in the first-stage DCI.

With the first example, when the offset (time offset) between the timing (slot or symbol) of the first-stage DCI and the timing (slot or symbol) of the second-stage DCI is smaller than (or below) a given threshold, the user terminal may assume that the PDSCH is quasi-co-located (QCLed) with a given CORESET (for example, the CORESET having the lowest index).

For example, when the time offset is smaller than (or below) a given threshold, the user terminal may assume that the DMRS port for the PDSCH (one or more antenna ports in one DMRS port group) is quasi-co-located (QCLed) with the CORESET having the lowest index number.

With the third example, the TCI-state field value (or the TCI state) included in the first-stage DCI indicates QCL information for the second-stage DCI, and the TCI-state field value (or the TCI state) included in the second-stage DCI indicates the QCL state for the PDSCH. Consequently, when receiving processes for the PDSCH are performed by using the second-stage DCI, the gain of assuming QCL can be achieved.

### (Radio Communication System)

Now, the structure of a radio communication system according to the present embodiment will be described below. In this radio communication system, communication is performed by using at least one of the above examples or a combination of them.

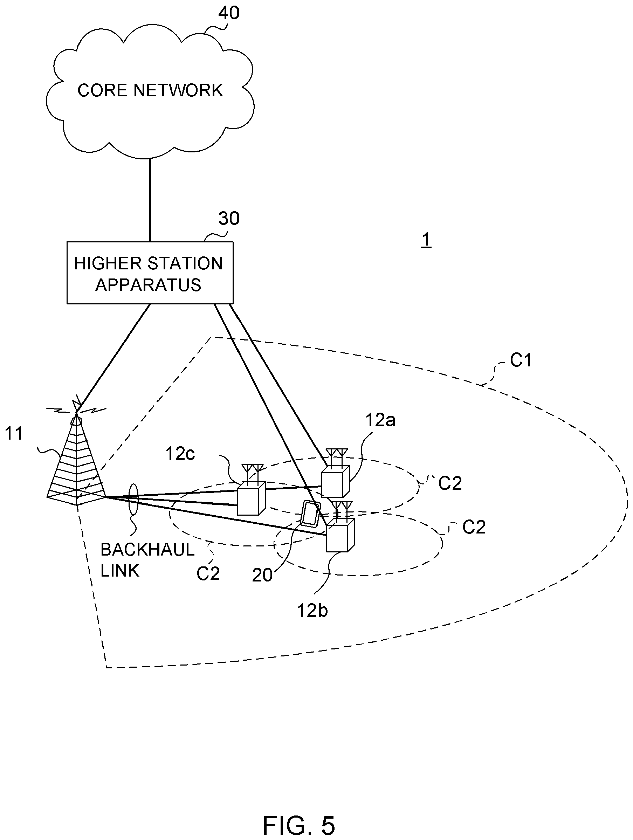

FIG. 5 is a diagram to show an exemplary schematic structure of a radio communication system according to the present embodiment. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit.

Note that the radio communication system 1 may be referred to as "LTE (Long-term evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and so on, or may be seen as a system to implement these.

The radio communication system 1 includes a radio base station 11 that forms a macro cell C1, with a relatively wide coverage, and radio base stations 12 (12a to 12c) that are placed within the macro cell C1 and that form small cells C2, which are narrower than the macro cell C1. Also, user terminals 20 are placed in the macro cell C1 and in each small cell C2. The arrangement and number of cells and user terminals 20 and so forth are not limited to those illustrated in the drawings.

The user terminals 20 can connect with both the radio base station 11 and the radio base stations 12. The user terminals 20 might use the macro cell C1 and the small cells C2 at the same time by means of CA or DC. Furthermore, the user terminals 20 may apply CA or DC by using a plurality of cells (CCs) (for example, five or fewer CCs or six or more CCs).

Between the user terminals 20 and the radio base station 11, communication can be carried out by using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the structure of the frequency band for use in each radio base station is by no means limited to these.

Furthermore, the user terminals 20 can communicate by using time division duplexing (TDD) and/or frequency division duplexing (FDD), in each cell. Furthermore, in each cell (carrier), a single numerology may be used, or a plurality of different numerologies may be used.

A numerology may refer to a communication parameter that is applied to transmission and/or receipt of a given signal and/or channel, and represent at least one of the subcarrier spacing, the bandwidth, the duration of symbols, the length of cyclic prefixes, the duration of subframes, the length of TTIs, the number of symbols per TTI, the radio frame configuration, the filtering process, the windowing process, and so on.

The radio base station 11 and a radio base station 12 (or two radio base stations 12) may be connected with each other by cables (for example, by optical fiber, which is in compliance with the CPRI (Common Public Radio Interface), the X2 interface and so on), or by radio.

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but these are by no means limiting. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations each having a local coverage, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter, the radio base stations 11 and 12 will be collectively referred to as "radio base stations 10," unless specified otherwise.

The user terminals 20 are terminals that support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and single-carrier frequency division multiple access (SC-FDMA) and/or OFDMA are applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands that are each formed with one or contiguous resource blocks, per terminal, and allowing a plurality of terminals to use mutually different bands. Note that the uplink and downlink radio access schemes are not limited to the combinations of these, and other radio access schemes may be used as well.

In the radio communication system 1, a downlink shared channel (PDSCH (Physical Downlink Shared CHannel)), which is used by each user terminal 20 on a shared basis, a broadcast channel (PBCH (Physical Broadcast CHannel)), downlink L1/L2 control channels and so on are used as downlink channels. User data, higher layer control information, SIBs (System Information Blocks) and so on are communicated in the PDSCH. Also, the MIB (Master Information Blocks) is communicated in the PBCH.

The L1/L2 control channels include at least one of DL control channels (such as a PDCCH (Physical Downlink Control CHannel) and/or an EPDCCH (Enhanced Physical Downlink Control CHannel)), a PCFICH (Physical Control Format Indicator CHannel), and a PHICH (Physical Hybrid-ARQ Indicator CHannel). Downlink control information (DCI), which includes PDSCH and/or PUSCH scheduling information and so on, is communicated by the PDCCH.

Note that scheduling information may be reported in DCI. For example, the DCI to schedule receipt of DL data may be referred to as "DL assignment," and the DCI to schedule transmission of UL data may also be referred to as "UL grant."

The number of OFDM symbols to use for the PDCCH is communicated by the PCFICH. HARQ (Hybrid Automatic Repeat reQuest) delivery acknowledgment information (also referred to as, for example, "retransmission control information," "HARQ-ACKs," "ACK/NACKs," etc.) in response to the PUSCH is transmitted by the PHICH. The EPDCCH is frequency-division-multiplexed with the PDSCH (downlink shared data channel) and used to communicate DCI and so on, like the PDCCH.

In the radio communication system 1, an uplink shared channel (PUSCH (Physical Uplink Shared CHannel)), which is used by each user terminal 20 on a shared basis, an uplink control channel (PUCCH (Physical Uplink Control CHannel)), a random access channel (PRACH (Physical Random Access CHannel)) and so on are used as uplink channels. User data, higher layer control information and so on are communicated by the PUSCH. Also, in the PUCCH, downlink radio quality information (CQI (Channel Quality Indicator)), delivery acknowledgment information, scheduling requests (SRs) and so on are communicated. By means of the PRACH, random access preambles for establishing connections with cells are communicated.

In the radio communication system 1, cell-specific reference signals (CRSs), channel state information reference signals (CSI-RSs), demodulation reference signals (DMRSs), positioning reference signals (PRSs) and so on are communicated as downlink reference signals. Also, in the radio communication system 1, measurement reference signals (SRSs (Sounding Reference Signals)), demodulation reference signals (DMRSs) and so on are communicated as uplink reference signals. Note that the DMRSs may be referred to as "user terminal-specific reference signals (UE-specific reference signals)." Also, the reference signals to be communicated are by no means limited to these.

### <Radio Base Station>

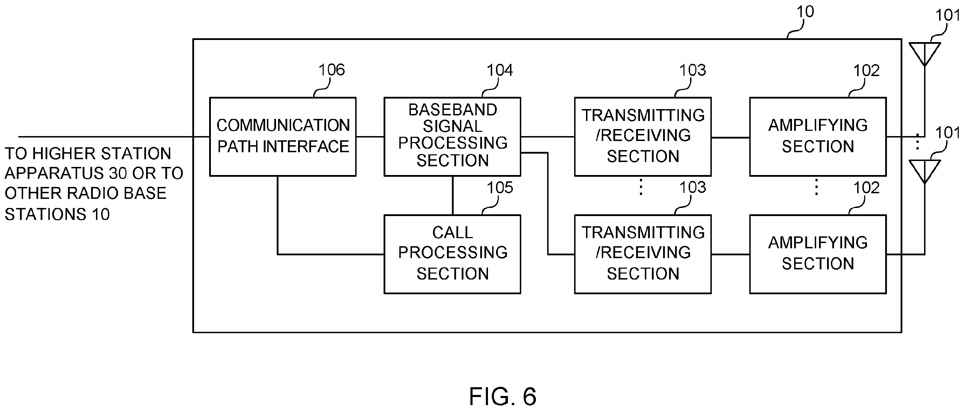

FIG. 6 is a diagram to show an exemplary overall structure of a radio base station according to the present embodiment. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30, to the baseband signal processing section 104, via the communication path interface 106.

In the baseband signal processing section 104, the user data is subjected to transmission processes, including a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing communication channels), manages the state of the radio base station 10, and manages the radio resources.

The communication path interface section 106 transmits and receives signals to and from the higher station apparatus 30 via a given interface. Also, the communication path interface 106 may transmit and receive signals (backhaul signaling) with other radio base stations 10 via an inter-base station interface (which is, for example, optical fiber that is in compliance with the CPRI (Common Public Radio Interface), the X2 interface, etc.).

Note that the transmitting/receiving sections 103 may furthermore have an analog beamforming section where analog beamforming takes place. The analog beamforming section may be constituted by an analog beamforming circuit (for example, a phase shifter, a phase shifting circuit, etc.) or analog beamforming apparatus (for example, a phase shifting device) that can be described based on general understanding of the technical field to which the present invention pertains. Furthermore, the transmitting/receiving antennas 101 may be constituted by, for example, array antennas. In addition, the transmitting/receiving sections 103 are designed so that single-BF or multiple-BF operations can be used.

The transmitting/receiving sections 103 may transmit signals by using transmitting beams, or receive signals by using receiving beams. Transmitting/receiving sections 103 may transmit and/or receive signals by using given beams determined by control section 301.

Furthermore, the transmitting/receiving sections 103 transmit downlink (DL) signals (including at least one of a DL data signal (downlink shared channel), a DL control signal (downlink control channel) and a DL reference signal) to the user terminal 20, and receive uplink (UL) signals (including at least one of a UL data signal, a UL control signal and a UL reference signal) from the user terminal 20.

Also, the transmitting/receiving sections 103 transmit DCI (for example, two-stage DCI to include the first and second DCIs) to the user terminal 20 by using a downlink control channel. Also, the transmitting/receiving sections 103 may transmit the TCI state (QCI-related information) of a downlink shared channel and/or a downlink control channel (DCI). In addition, the transmitting/receiving sections 103 may transmit DL-RS-related information (for example, information to indicate the configurations of CSI-RS resources and/or SS/PBCH blocks).

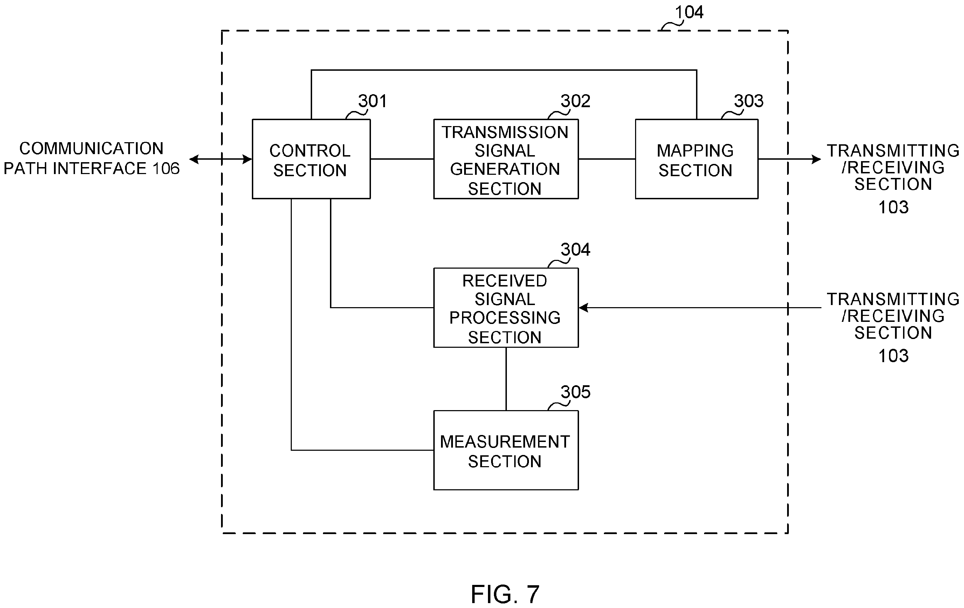

FIG. 7 is a diagram to show an exemplary functional structure of a radio base station according to the present embodiment. Note that, although this example primarily shows functional blocks that pertain to characteristic parts of the present embodiment, the radio base station 10 might have other functional blocks that are necessary for radio communication as well.

The baseband signal processing section 104 at least has a control section (scheduler) 301, a transmission signal generation section 302, a mapping section 303, a received signal processing section 304 and a measurement section 305. Note that these configurations have only to be included in the radio base station 10, and some or all of these configurations may not be included in the baseband signal processing section 104.

The control section (scheduler) 301 controls the whole of the radio base station 10. The control section 301 can be constituted by a controller, a control circuit or control apparatus that can be described based on general understanding of the technical field to which the present invention pertains.

The control section 301 controls, for example, generation of signals in the transmission signal generation section 302, allocation of signals in the mapping section 303, and so on. Furthermore, the control section 301 controls signal receiving processes in the received signal processing section 304, measurements of signals in the measurement section 305, and so on.

The control section 301 controls the scheduling (for example, resource allocation) of system information, downlink data signals (for example, signals transmitted in the PDSCH) and downlink control signals (for example, signals transmitted in the PDCCH and/or the EPDCCH, such as delivery acknowledgment information). Also, the control section 301 controls the generation of downlink control signals, downlink data signals, and so on based on the results of deciding whether or not retransmission control is necessary for uplink data signals, and so on.

The control section 301 controls scheduling of synchronization signals (for example, PSS/SSS), downlink reference signals (for example, CRS, CSI-RS, DMRS, etc.) and the like.

The control section 301 may exert control so that transmitting beams and/or receiving beams are formed by using digital BF (for example, precoding) in the baseband signal processing section 104 and/or analog BF (for example, phase rotation) in the transmitting/receiving sections 103.

The control section 301 exerts control so that one TCI state is configured for a specific CORESET.

Furthermore, the control section 301 may control the relationship of quasi-co-location (QCL) among a plurality of signals, and may control at least one of the setting, generation and transmission of information related to QCL (TCI state).

For example, the control section 301 may exert control so that the second DCI (second-stage DCI) and the downlink shared channel are quasi-co-located (first example). The control section 301 may control the generation of the first DCI (first-stage DCI) that includes (a TCI state to represent) at least one of information about the quasi-co-location of a downlink shared channel and information about the quasi-co-location for the second DCI.

For example, the control section 301 may exert control so that the first DCI and the second DCI are quasi-co-located (second example). The control section 301 may control the generation of the first DCI (first-stage DCI) that includes (a TCI state to represent) information about the quasi-co-location of the downlink shared channel.

Also, the control section 301 may control the generation of the first DCI (first-stage DCI) that includes (a TCI state to represent) information about the quasi-co-location of the second DCI (third example). Also, the control section 301 may control the generation of the second DCI (second-stage DCI) that includes (a TCI state to represent) information about the quasi-co-location of the downlink shared channel (third example).

In addition, when the time offset between the first DCI and the second DCI is smaller than a given threshold, the control section 301 may exert control so that the downlink shared channel and the control resource set having the lowest index number are quasi-co-located.

The transmission signal generation section 302 generates downlink signals (downlink control signals, downlink data signals, downlink reference signals, and so on) based on commands from the control section 301, and outputs these signals to the mapping section 303. The transmission signal generation section 302 can be constituted by a signal generator, a signal generating circuit or signal generating apparatus that can be described based on general understanding of the technical field to which the present invention pertains.

For example, the transmission signal generation section 302 generates DL assignments, which report downlink data allocation information, and/or UL grants, which report uplink data allocation information, based on commands from the control section 301. DL assignments and UL grants are both DCI, in compliance with DCI format. Also, the downlink data signals are subjected to the coding process, the modulation process and so on, by using coding rates, modulation schemes and the like that are determined based on, for example, channel state information (CSI) from each user terminal 20.

The mapping section 303 maps the downlink signals generated in the transmission signal generation section 302 to given radio resources based on commands from the control section 301, and outputs these to the transmitting/receiving sections 103. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminal 20 (uplink control signals, uplink data signals, uplink reference signals, etc.). The received signal processing section 304 can be constituted by a signal processor, a signal processing circuit or signal processing apparatus that can be described based on general understanding of the technical field to which the present invention pertains.

The received signal processing section 304 outputs the decoded information acquired through the receiving processes, to the control section 301. For example, when a PUCCH to contain an HARQ-ACK is received, the received signal processing section 304 outputs this HARQ-ACK to the control section 301. Also, the received signal processing section 304 outputs the received signals and/or the signals after the receiving processes to the measurement section 305.

The measurement section 305 conducts measurements with respect to the received signals. The measurement section 305 can be constituted by a measurer, a measurement circuit or measurement apparatus that can be described based on general understanding of the technical field to which the present invention pertains.

For example, the measurement section 305 may perform RRM (Radio Resource Management) measurements, CSI (Channel State Information) measurements, and so on, based on the received signals. The measurement section 305 may measure the received power (for example, RSRP (Reference Signal Received Power)), the received quality (for example, RSRQ (Reference Signal Received Quality), SINR (Signal to Interference plus Noise Ratio), SNR (Signal to Noise Ratio), etc.), the signal strength (for example, RSSI (Received Signal Strength Indicator)), transmission path information (for example, CSI) and so on. The measurement results may be output to the control section 301.

### <User Terminal>

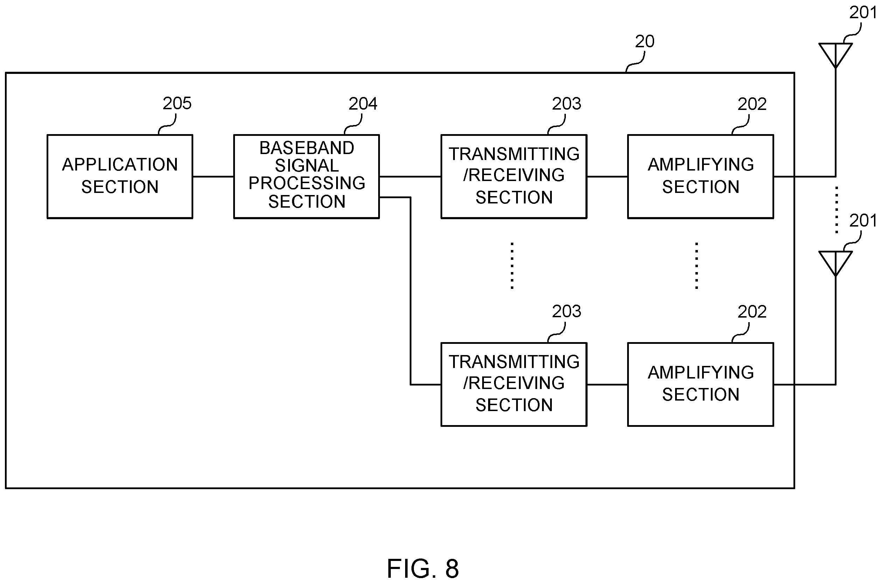

FIG. 8 is a diagram to show an exemplary overall structure of a user terminal according to the present embodiment. A user terminal 20 has a plurality of transmitting/receiving antennas 201, amplifying sections 202, transmitting/receiving sections 203, a baseband signal processing section 204, and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. A transmitting/receiving section 203 can be constituted by a transmitters/receiver, a transmitting/receiving circuit or transmitting/receiving apparatus that can be described based on general understanding of the technical field to which the present invention pertains. Note that a transmitting/receiving section 203 may be structured as a transmitting/receiving section in one entity, or may be constituted by a transmitting section and a receiving section.

The baseband signal processing section 204 performs, for the baseband signal that is input, an FFT process, error correction decoding, a retransmission control receiving process, and so on. Downlink user data is forwarded to the application section 205. The application section 205 performs processes related to higher layers above the physical layer and the MAC layer, and so on. Also, in the downlink data, the broadcast information can be also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving sections 203.

Baseband signals that are output from the baseband signal processing section 204 are converted into a radio frequency band in the transmitting/receiving sections 203, and transmitted. The radio frequency signals that are subjected to frequency conversion in the transmitting/receiving sections 203 are amplified in the amplifying sections 202, and transmitted from the transmitting/receiving antennas 201.

Note that the transmitting/receiving sections 203 may further have an analog beamforming section where analog beamforming takes place. The analog beamforming section may be constituted by an analog beamforming circuit (for example, a phase shifter, a phase shifting circuit, etc.) or analog beamforming apparatus (for example, a phase shifting device) that can be described based on general understanding of the technical field to which the present invention pertains. Furthermore, the transmitting/receiving antennas 201 may be constituted by, for example, array antennas. In addition, the transmitting/receiving sections 203 are structured so that single-BF and multiple-BF can be used.

The transmitting/receiving sections 203 may transmit signals by using transmitting beams, or receive signals by using receiving beams. The transmitting/receiving sections 203 may transmit and/or receive signals by using given beams selected by the control section 401.

Also, the transmitting/receiving sections 203 receive downlink (DL) signals (including at least one of a DL data signal (downlink shared channel), a DL control signal (downlink control channel), and a DL reference signal) from the radio base station 10, and transmit uplink (UL) signals (including at least one of a UL data signal, a UL control signal, and a UL reference signal) to the radio base station 10.

Also, the transmitting/receiving sections 203 transmit DCI (for example, two-stage DCI to include the first and second DCIs) to the user terminal 20 by using a downlink control channel. Also, the transmitting/receiving sections 203 may transmit the TCI state (QCI-related information) of a downlink shared channel and/or a downlink control channel (DCI). Furthermore, the transmitting/receiving sections 203 may receive DL-RS-related information (for example, information to indicate the configurations of CSI-RS resources and/or SS/PBCH blocks).

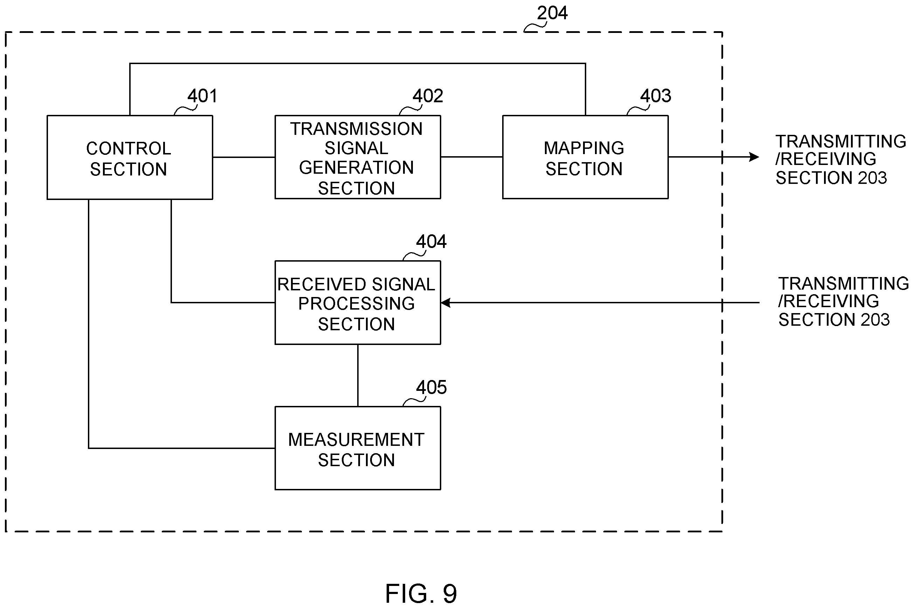

FIG. 9 is a diagram to show an exemplary functional structure of a user terminal according to the present embodiment. Note that, although this example primarily shows functional blocks that pertain to characteristic parts of present embodiment, the user terminal 20 might have other functional blocks that are necessary for radio communication as well.

The baseband signal processing section 204 provided in the user terminal 20 at least has a control section 401, a transmission signal generation section 402, a mapping section 403, a received signal processing section 404, and a measurement section 405. Note that these configurations have only to be included in the user terminal 20, and some or all of these configurations may not be included in the baseband signal processing section 204.

The control section 401 controls the whole of the user terminal 20. The control section 401 can be constituted by a controller, a control circuit or control apparatus that can be described based on general understanding of the technical field to which the present invention pertains.

The control section 401 controls, for example, generation of signals in the transmission signal generation section 402, allocation of signals in the mapping section 403, and so on. Furthermore, the control section 401 controls signal receiving processes in the received signal processing section 404, measurements of signals in the measurement section 405, and so on.

The control section 401 acquires the downlink control signals and downlink data signals transmitted from the radio base station 10, via the received signal processing section 404. The control section 401 controls the generation of uplink control signals and/or uplink data signals based on results of deciding whether or not retransmission control is necessary for the downlink control signals and/or downlink data signals, and so on.

The control section 401 may exert control so that transmitting beams and/or receiving beams are formed by using digital BF (for example, precoding) in the baseband signal processing section 204 and/or by using analog BF (for example, phase rotation) in the transmitting/receiving sections 203.

The control section 401 may control the receipt (including at least one of demapping, demodulation and decoding) of at least one of first DCI (first-stage DCI), second DCI (second-stage DCI) and a downlink shared channel, assuming quasi-co-located relationship with respect to the first DCI, the second DCI and the downlink shared channel.

To be more specific, the control section 401 may control the receipt of at least one of the second DCI and the downlink shared channel based on the state of a transmission configuration indicator (TCI) included in the first DCI.

The control section 401 may assume that the second DCI and the downlink shared channel hold a quasi-co-located relationship (first example). Furthermore, based on (a TCI state to represent) at least one of information about the quasi-co-location of the downlink shared channel, and information about the quasi-co-location of the second DCI, included in the first DCI, the control section 401 may control the receipt of at least one of the downlink shared channel and the second DCI.

The control section 401 may assume that the first DCI and the second DCI hold a quasi-co-located relationship (second example). Also, the control section 401 may control the receipt of the downlink shared channel based on the information about (or a TCI state to represent) the quasi-co-location of the downlink shared channel, included in first DCI.

The control section 401 may control the receipt of the second DCI based on (or a TCI state to represent) the information about the quasi-co-location of the second DCI, included in the first DCI (third example). Also, the control section 401 may control the receipt of the downlink shared channel based on (or a TCI state to represent) the information about the quasi-co-location of the downlink shared channel, included in the second DCI (third example).

When the time offset between the first DCI and the second DCI is smaller than a given threshold, the control section 401 may assume that the downlink shared channel holds a quasi-co-colocation relationship with the control resource set having the lowest index number.

The transmission signal generation section 402 generates uplink signals (uplink control signals, uplink data signals, uplink reference signals, etc.) based on commands from the control section 401, and outputs these signals to the mapping section 403. The transmission signal generation section 402 can be constituted by a signal generator, a signal generating circuit, or signal generation apparatus that can be described based on general understanding of the technical field to which the present invention pertains.

For example, the transmission signal generation section 402 generates uplink control signals such as delivery acknowledgement information, channel state information (CSI) and so on, based on commands from the control section 401. Also, the transmission signal generation section 402 generates uplink data signals based on commands from the control section 401. For example, when a UL grant is included in a downlink control signal that is reported from the radio base station 10, the control section 401 commands the transmission signal generation section 402 to generate an uplink data signal.

The mapping section 403 maps the uplink signals generated in the transmission signal generation section 402 to radio resources based on commands from the control section 401, and outputs these to the transmitting/receiving sections 203. The mapping section 403 can be constituted by a mapper, a mapping circuit or mapping apparatus that can be described based on general understanding of the technical field to which the present invention pertains.

The received signal processing section 404 performs receiving processes (for example, demapping, demodulation, decoding and so on) for received signals that are input from the transmitting/receiving sections 203. Here, the received signals include, for example, downlink signals (downlink control signals, downlink data signals, downlink reference signals, and so on) that are transmitted from the radio base station 10. The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present disclosure.

The received signal processing section 404 outputs the decoded information acquired through the receiving processes, to the control section 401. The received signal processing section 404 outputs, for example, broadcast information, system information, RRC signaling, DCI and so on, to the control section 401. Also, the received signal processing section 404 outputs the received signals and/or the signals after the receiving processes to the measurement section 405.

The measurement section 405 conducts measurements with respect to the received signals. The measurement section 405 can be constituted by a measurer, a measurement circuit or measurement apparatus that can be described based on general understanding of the technical field to which the present invention pertains.

For example, the measurement section 405 may perform RRM measurements, CSI measurements, and so on, based on the received signals. The measurement section 405 may measure the received power (for example, RSRP), the received quality (for example, RSRQ, SINR, SNR, etc.), the signal strength (for example, RSSI), transmission path information (for example, CSI), and so on. The measurement results may be output to the control section 401.

### <Hardware Structure>

Note that the block diagrams that have been used to describe the present embodiment show blocks in functional units. These functional blocks (components) may be implemented in arbitrary combinations of hardware and/or software. Also, the method for implementing each functional block is not particularly limited. That is, each functional block may be realized by one piece of apparatus that is physically and/or logically aggregated, or may be realized by directly and/or indirectly connecting two or more physically and/or logically-separate pieces of apparatus (by using cables and/or radio, for example) and using these multiple pieces of apparatus.

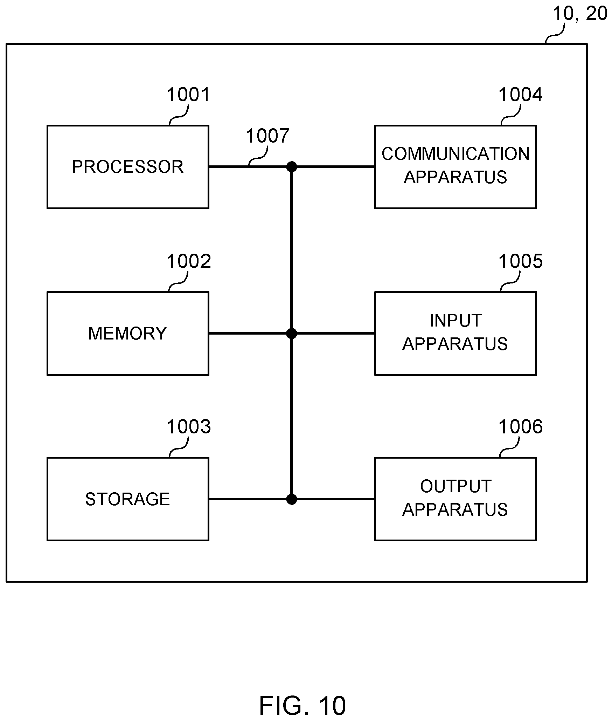

For example, the radio base station, user terminals, and so on according to the present embodiment may function as a computer that executes the processes of each example of the present embodiment. FIG. 10 is a diagram to show an exemplary hardware structure of a radio base station and a user terminal according to the present embodiment. Physically, the above-described radio base stations 10 and user terminals 20 may be formed as a computer apparatus that includes a processor 1001, a memory 1002, a storage 1003, communication apparatus 1004, input apparatus 1005, output apparatus 1006, a bus 1007 and so on.

Note that, in the following description, the term "apparatus" may be replaced by "circuit," "device," "unit" and so on. Note that, the hardware structure of a radio base station 10 and a user terminal 20 may be designed to include one or more of each apparatus shown in the drawings, or may be designed not to include part of the apparatus.

For example, although only one processor 1001 is shown, a plurality of processors may be provided. Furthermore, processes may be implemented with one processor, or processes may be implemented simultaneously or in sequence, or by using different techniques, on one or more processors. Note that the processor 1001 may be implemented with one or more chips.

The functions of the radio base station 10 and the user terminal 20 are implemented by, for example, allowing hardware such as the processor 1001 and the memory 1002 to read given software (programs), and allowing the processor 1001 to do calculations, control communication that involves the communication apparatus 1004, control the reading and/or writing of data in the memory 1002 and the storage 1003, and so on.

The processor 1001 may control the whole computer by, for example, running an operating system. The processor 1001 may be constituted by a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so forth from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)," and so on. The memory 1002 can store executable programs (program codes), software modules, and so on for implementing the radio communication methods according to the present embodiment.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) or the like), a digital versatile disc, a Blu-ray (registered trademark) disk, etc.), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using cable and/or wireless networks, and may be referred to as, for example, a "network device," a "network controller," a "network card," a "communication module," and so on. The communication apparatus 1004 may be configured to include a high frequency switch, a duplexer, a filter, a frequency synthesizer and so on, in order to implement, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from outside (for example, a keyboard, a mouse, a microphone, a switch, a button, a sensor and so on). The output apparatus 1006 is an output device for allowing sending output to outside (for example, a display, a speaker, an LED (Light Emitting Diode) lamp, and so on). Note that the input apparatus 1005 and the output apparatus 1006 may be provided in an integrated structure (for example, a touch panel).

Furthermore, these pieces of apparatus, including the processor 1001, the memory 1002 and so on, are connected by the bus 1007, so as to communicate information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by these pieces of hardware. For example, the processor 1001 may be implemented with at least one of these pieces of hardware.

### (Variations)

Note that, the terminology used in this specification and the terminology that is needed to understand this specification may be replaced by other terms that communicate the same or similar meanings. For example, a "channel" and/or a "symbol" may be replaced by a "signal" (or "signaling"). Also, a "signal" may be a "message." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency," and so on.

Furthermore, a radio frame may be comprised of one or more periods (frames) in the time domain. One or more periods (frames) that constitute a radio frame may be each referred to as a "subframe." Furthermore, a subframe may be comprised of one or multiple slots in the time domain. A subframe may be a fixed time duration (for example, 1 ms), which does not depend on numerology.

Furthermore, a slot may be comprised of one or more symbols in the time domain (OFDM (Orthogonal Frequency Division Multiplexing) symbols, SC-FDMA (Single Carrier Frequency Division Multiple Access) symbols, and so on). Also, a slot may be a time unit based on numerology. Also, a slot may include a plurality of minislots. Each minislot may be comprised of one or more symbols in the time domain. Also, a minislot may be referred to as a "subslot."

A radio frame, a subframe, a slot, a minislot, and a symbol all refer to a unit of time in signal communication. A radio frame, a subframe, a slot, a minislot and a symbol may be each called by other applicable names. For example, one subframe may be referred to as a "transmission time interval (TTI)," or a plurality of consecutive subframes may be referred to as a "TTI," or one slot or one minislot may be referred to as a "TTI." That is, a subframe and/or a TTI may be a subframe (1 ms) in existing LTE, may be a shorter period than 1 ms (for example, one to thirteen symbols), or may be a longer period of time than 1 ms. Note that the unit to represent a TTI may be referred to as a "slot," a "minislot" and so on, instead of a "subframe."

Here, a TTI refers to the minimum time unit for scheduling in radio communication, for example. For example, in LTE systems, a radio base station schedules the radio resources (such as the frequency bandwidth and transmission power each user terminal can use) to allocate to each user terminal in TTI units. Note that the definition of TTIs is by no means limited to this.

A TTI may be the transmission time unit of channel-encoded data packets (transport blocks), code blocks and/or codewords, or may be the unit of processing in scheduling, link adaptation, and so on. Note that, when a TTI is given, the period of time (for example, the number of symbols) in which transport blocks, code blocks and/or codewords are actually mapped may be shorter than the TTI.

Note that, when one slot or one minislot is referred to as a "TTI," one or more TTIs (that is, one or multiple slots or one or more minislots) may be the minimum time unit of scheduling. Also, the number of slots (the number of minislots) to constitute this minimum time unit for scheduling may be controlled.

A TTI having a time length of 1 ms may be referred to as a "normal TTI" (TTI in LTE Rel. 8 to 12), a "long TTI," a "normal subframe," a "long subframe," and so on. A TTI that is shorter than a normal TTI may be referred to as a "shortened TTI," a "short TTI," a "partial TTI" (or a "fractional TTI"), a "shortened subframe," a "short subframe," a "minislot," a "sub-slot," and so on.

Note that a long TTI (for example, a normal TTI, a subframe, etc.) may be replaced with a TTI having a time duration exceeding 1 ms, and a short TTI (for example, a shortened TTI) may be replaced with a TTI having a TTI length less than the TTI length of a long TTI and not less than 1 ms.

A resource block (RB) is the unit of resource allocation in the time domain and the frequency domain, and may include one or a plurality of consecutive subcarriers in the frequency domain. Also, an RB may include one or more symbols in the time domain, and may be one slot, one minislot, one subframe or one TTI in length. One TTI and one subframe each may be comprised of one or more resource blocks. Note that one or more RBs may be referred to as a "physical resource block (PRB (Physical RB))," a "subcarrier group (SCG)," a "resource element group (REG)," a "PRB pair," an "RB pair," and so on.

Furthermore, a resource block may be comprised of one or more resource elements (REs). For example, one RE may be a radio resource field of one subcarrier and one symbol.

Note that the structures of radio frames, subframes, slots, minislots, symbols, and so on described above are simply examples. For example, configurations pertaining to the number of subframes included in a radio frame, the number of slots included in a subframe or a radio frame, the number of minislots included in a slot, the number of symbols and RBs included in a slot or a minislot, the number of subcarriers included in an RB, the number of symbols in a TTI, the symbol duration, the length of cyclic prefixes (CPs), and so on can be variously changed.

Also, the information and parameters described in this specification may be represented in absolute values or in relative values with respect to given values, or may be represented by using other applicable information. For example, a radio resource may be indicated by a given index.

The names used for parameters and so on in this specification are in no respect limiting. For example, since various channels (PUCCH (Physical Uplink Control CHannel), PDCCH (Physical Downlink Control CHannel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals, and so on can be output from higher layers to lower layers, and/or from lower layers to higher layers. Information, signals, and so on may be input and/or output via a plurality of network nodes.

The information, signals, and so on that are input and/or output may be stored in a specific location (for example, in a memory), or may be managed in a control table. The information, signals, and so on to be input and/or output can be overwritten, updated, or appended. The information, signals, and so on that are output may be deleted. The information, signals, and so on that are input may be transmitted to other pieces of apparatus.

Reporting of information is by no means limited to the examples/embodiments described in this specification, and other methods may be used as well. For example, reporting of information may be implemented by using physical layer signaling (for example, downlink control information (DCI), uplink control information (UCI)), higher layer signaling (for example, RRC (Radio Resource Control) signaling, broadcast information (the master information block (MIB), system information blocks (SIBs) and so on), MAC (Medium Access Control) signaling, etc.), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as "RRC messages," and can be, for example, an "RRC connection setup message," "RRC connection reconfiguration message," and so on. Also, MAC signaling may be reported by using, for example, MAC control elements (MAC CEs (Control Elements)).

Also, reporting of given information (for example, reporting of information to the effect that "X holds") does not necessarily have to be sent explicitly, and can be sent in an implicit way (for example, by not reporting this piece of information, by reporting another piece of information, and so on).

Decisions may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions, and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on), and/or wireless technologies (infrared radiation, microwaves, and so on), these wired technologies and/or wireless technologies are also included in the definition of communication media.

The terms "system" and "network" as used herein are used interchangeably.

As used herein, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell," and so on.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part or all of the coverage area of a base station and/or a base station subsystem that provides communication services within this coverage.

As used herein, the terms "mobile station (MS)," "user terminal," "user equipment (UE)," and "terminal" may be used interchangeably.

A mobile station may be referred to, by a person skilled in the art, as a "subscriber station," "mobile unit," "subscriber unit," "wireless unit," "remote unit," "mobile device," "wireless device," "radio communication device," "remote device," "mobile subscriber station," "access terminal," "mobile terminal," "wireless terminal," "remote terminal," "handset," "user agent," "mobile client," "client," or some other suitable terms.

Furthermore, the radio base stations in this specification may be interpreted as user terminals. For example, the examples/embodiments of the present disclosure may be applied to a configuration in which communication between a radio base station and a user terminal is replaced with communication among a plurality of user terminals (D2D (Device-to-Device)). In this case, user terminals 20 may have the functions of the radio base stations 10 described above. In addition, terms such as "uplink" and "downlink" may be interpreted as "side." For example, an "uplink channel" may be interpreted as a "side channel."

Likewise, the user terminals in this specification may be interpreted as radio base stations. In this case, the radio base stations 10 may have the functions of the user terminals 20 described above.

Certain actions which have been described in this specification to be performed by base stations may, in some cases, be performed by their upper nodes. In a network comprised of one or more network nodes with base stations, it is clear that various operations that are performed so as to communicate with terminals can be performed by base stations, one or more network nodes (for example, MMEs (Mobility Management Entities), S-GWs (Serving-Gateways), and so on may be possible, but these are not limiting) other than base stations, or combinations of these.

The examples/embodiments illustrated in this specification may be used individually or in combinations, which may be switched depending on the mode of implementation. The order of processes, sequences, flowcharts, and so on that have been used to describe the examples/embodiments herein may be re-ordered as long as inconsistencies do not arise. For example, although various methods have been illustrated in this specification with various components of steps in exemplary orders, the specific orders that are illustrated herein are by no means limiting.

The examples/embodiments illustrated in this specification may be applied to systems that use LTE (Long-term evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR (New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), other adequate radio communication methods, and/or next-generation systems that are enhanced based on these.

The phrase "based on" as used in this specification does not mean "based only on" unless otherwise specified. In other words, the phrase "based on" means both "based only on" and "based at least on."

Reference to elements with designations such as "first," "second," and so on as used herein does not generally limit the number/quantity or order of these elements. These designations are used herein only for convenience, as a method for distinguishing between two or more elements. In this way, reference to the first and second elements does not imply that only two elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database, or some other data structure), ascertaining, and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing, and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be interpreted as "access."

As used herein, when two elements are connected, these elements may be considered "connected" or "coupled" to each other by using one or more electrical wires, cables, and/or printed electrical connections, and, as a number of nonlimiting and non-inclusive examples, by using electromagnetic energy having wavelengths of the radio frequency region, the microwave region and/or the optical region (both visible and invisible).

In the present specification, the phrase "A and B are different" may mean "A and B are different from each other." The terms such as "leave," "coupled" and the like may be interpreted as well.

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

## Claims

1. A user terminal comprising:
a receiving section that receives a downlink shared channel that is scheduled by at least one of first downlink control information (DCI) and second downlink control information (DCI); and
a control section that controls receipt of at least one of the second DCI and the downlink shared channel, based on a state of a transmission configuration indicator (TCI) included in the first DCI.

2. The user terminal according to claim 1, wherein:
the second DCI and the downlink shared channel hold a quasi-co-located relationship; and
the state of the TCI included in the first DCI indicates at least one of information about quasi-co-location of the downlink shared channel and information about quasi-co-location of the second DCI.

3. The user terminal according to claim 1, wherein:
the first DCI and the second DCI hold a quasi-co-located relationship; and
the state of the TCI included in the first DCI represents information about quasi-co-location of the downlink shared channel.

4. The user terminal according to claim 1, wherein:
the state of the TCI included in the first DCI indicates information about quasi-co-location of the second DCI; and
a state of a TCI included in the second DCI represents information about quasi-co-location of the downlink shared channel.

5. The user terminal according to one of claim 2 to claim 4, wherein, when a time offset between the first DCI and the second DCI is smaller than a given threshold, the control section assumes that the downlink shared channel and the control resource set having a lowest index number hold a quasi-co-located relationship.

6. A radio communication method comprising, in a user terminal, the steps of:
receiving a downlink shared channel that is scheduled by at least one of first downlink control information (DCI) and second downlink control information (DCI); and
controlling receipt of at least one of the second DCI and the downlink shared channel, based on a state of a transmission configuration indicator (TCI) included in the first DCI.
